# EUROPÄISCHE PATENTSCHRIFT

(11) **EP 2 858 803 B1**
(45) Veröffentlichungstag und Bekanntmachung des Hinweises auf die Patenterteilung: **29.08.2018**
(21) Anmeldenummer: 13728374.3
(22) Anmeldetag: 11.06.2013
(51) Int. Cl.: B29C 45/14, B29C 45/16, B29C 45/00, B29C 35/08, C08J 3/24, B32B 27/08, B32B 27/28, B32B 27/32, B32B 1/02, B65D 41/00, B29K 283/00, B29L 1/00, B29K 23/00, B29K 83/00

(54) **VERFAHREN ZUR HERSTELLUNG VON KUNSTSTOFF-VERBUNDFORMKÖRPERN**
METHOD FOR PRODUCING PLASTIC COMPOSITE MOLDED BODIES
PROCÉDÉ DE PRODUCTION DE CORPS MOULÉS COMPOSITES EN PLASTIQUE

(30) Priorität: 11.06.2012 DE 102012105009
(43) Veröffentlichungstag der Anmeldung: 15.04.2015
(73) Patentinhaber: Momentive Performance Materials GmbH, 51368 Leverkusen (DE)
(72) Erfinder: FRANSSEN, Oliver, 61130 Nidderau (DE); TRUMM, Clemens, 53757 Sankt Augustin (DE)
(74) Vertreter: Gille Hrabal
(86) Internationale Anmeldenummer: PCT/EP2013/061951
(87) Internationale Veröffentlichungsnummer: WO 2013/186185

(56) Entgegenhaltungen:
- WO-A1-2011/101269
- DE-A1- 4 229 224
- JP-A- H08 174 604
- US-A- 5 885 514
- US-A1- 2007 287 208

## Beschreibung

Die Erfindung betrifft Verfahren zur Herstellung von Kunststoff-Verbundformkörpern, in dem insbesondere Hart-Weich-Formteile aus vorzugsweise niedrigschmelzenden thermoplastischen Kunststoffen und lichthärtbaren Polyorganosiloxan-Zusammensetzungen in einem zusammenhängenden Formgebungsschritt hergestellt werden.

Verbundformkörper aus thermoplastischen Kunststoffen und Elastomeren wie beispielsweise Babysauger oder Tastaturen mit elastomeren Schaltmatten sind bekannt. Die alleinige Verwendung von thermoplastischen Kunststoffen zur Herstellung solcher Formkörper ist im Allgemeinen nicht möglich, da diese insbesondere für Dichtzwecke eine zu hohe Härte aufweisen uns nicht gummielastisch sind. Auch lässt die Haptik der thermoplastischen oder duromeren Kunststoffe oftmals zu wünschen übrig. Auf der anderen Seite weisen die weicheren Elastomeranteile oftmals eine unzureichende mechanische Festigkeit auf, um dem Formkörper die nötige Stabilität zu verleihen. Daher besteht oftmals der Wunsch, Kunststoffverbund-Formkörper herzustellen, die aus einem harten thermoplastischen oder duromeren formstützenden Teil und aus einem weichen elastomeren oftmals an der Oberfläche befindlichen Teil bestehen, welches insbesondere die Haptik, elektrische Eigenschaften oder die Dichtkraft bestimmen. Derartige Verbundformkörper werden heute durch mechanisches Zusammenfügen von Thermoplast- und Elastomerteilen hergestellt. Eine spezielle Variante ist der Zweikomponenten-Spritzguß von thermisch härtbaren Elastomeren mit Thermoplastteilen in einer gemeinsamen Form. Hierbei vernetzt man die Elastomere bei einer Temperatur oberhalb von 120 °C. Zuvor muß das Thermoplastformteil aus dem Schmelzzustand zum Erstarren bzw. zur Erhaltung der Form heruntergekühlt werden. Diese Vorgehensweise ist energetisch natürlich sehr ungünstig, da zuerst erwärmt werden muss (Formgebung des thermoplastischen oder duromeren Kunststoffes), dann abgekühlt werden muss, und anschließend bei der Vernetzung des Elastomeren wieder erwärmt werden muss. Auch darf die Vernetzungstemperatur des Elastomers die Erweichungstemperatur des Thermoplasten wiederum nicht überschreiten. Daher können nur bestimmte besonders hochwertige und mit hoher Wärmestandfestigkeit ausgestattete Kunststoffe verwendet werden.

Die vorliegenden Erfindung lag daher unter anderem das Problem zugrunde, Verbundformkörper auch aus niedrig schmelzenden, oftmals preiswerteren Kunststoffen mit geringer Wärmestandfestigkeit herzustellen, und somit das Spektrum der verfügbaren harten Kompositmaterialen auszuweiten. Darüber hinaus sollte es auf diese Weise auch möglich werden, beispielsweise ökologisch verträglichere alternative Materialien bei der Herstellung derartiger Verbundformkörper zum Einsatz zu bringen, was insbesondere in solchen Bereichen relevant ist, bei denen der Verbundformkörper entweder unmittelbar oder mittelbar im Kontakt mit Menschen gelangt, wie zum Beispiel bei Lebensmittelverpackungen. Schließlich sollte die energetisch ungünstige Verfahrensweise mit zwei Aufheizschritten bei der Herstellung der Verbundformkörper vermieden werden.

Die Erfinder fanden, dass derartige Verbundformkörper in vorteilhafter Weise hergestellt werden können, in dem bei niedrigen Temparaturen wie insbesondere zwischen 0 bis 50 °C lichthärtbare Silikonzusammensetzungen eingesetzt.

Mit dieser Materialkombination lassen sich auch in Spritzgußverfahren sowohl durch Formen bzw. Form-Werkzeugen mit Thermoplast-Einlegeteilen als auch mit Zweikomponenten-Formen Kompositteile aus beliebigen Thermoplasten und Silikon-Elastomeren zusammenfügen und eine Vielzahl von nützlichen Kompositformteilen wirtschaftlich und ökologisch verträglich herstellen. Des weiteren wurden durch das erfindungsgemäße Verfahren viele der niedrigschmelzenden Thermoplastkunststoffe nunmehr für die Herstellung von Verbundformkörpern auch im Bereich der Lebensmittelbehälter, von Trinkwasserversorgungsinstallationen durch die vorliegende Erfindung erstmals zugänglich.

Mit der speziellen Ausführungsform, in der die Bestrahlung der lichthärtenden Silikonzusammensetzung durch das Kunststoffformteil selbst erfolgt, werden insbesondere transparente Formen oder Formen mit transparenten Bauteilen entbehrlich, was zu einer Kostensenkung des Verfahrens führt, da die üblichen transparenten Elemente als fester Bestandteil von Formen für lichthärtende Materialien durch UV-Bestrahlung unerwünschten Alterungsprozessen unterliegen. Die US 5,885,514 offenbart betrifft eine Vorrichtung und ein Verfahren zur Herstellung insbesondere einer Zylinderkopfdichtung. WO2011/101269 offenbart ein Verfahren zur Herstellung von Kunststoff-Verbundformkörpern, umfassend: Bereitstellen eines Formteils aus einem thermoplastischen Polymer mit geringer Wärmeformbeständigkeit wie Polyolefine oder Polycarbonate in einer Form; Bestrahlen einer lichthärtenden Silikonzusammensetzung mit Licht einer zur Härtung der Siliconzusammensetzung geeigneten Wellenlänge in einem in die obengenannte Form einführenden Spritzkanal; Einführen der lichthärtenden Silikonzusammensetzung in die Form, worin sie härtet. Die vorliegende Erfindung betrifft somit ein Verfahren zur Herstellung von Kunststoff-Verbundformkörpern, wie im Anspruch 1 definiert.

Bei den im Rahmen der vorliegenden Erfindung verwendeten thermoplastischen Kunststoffe wählt man diese insbesondere aus der Gruppe Polymeren, die eine Wärmeformbeständigkeitstemperatur (HDT) nach DIN EN ISO 75-1,-2 (vorzugsweise nach Methode B, 0,45 MPa) von weniger als 160 °C, vorzugsweise weniger als 150 °C, vorzugsweise weniger als 140 °C, vorzugsweise weniger als 130 °C sowie besonders bevorzugt weniger als 120 °C aufweisen.

Der thermoplastische Kunststoff ist Polypropylen.

Bei der lichthärtenden Silikonzusammensetzung handelt es sich bevorzugt um solche, die aus der Gruppe der durch Hydrosilylierung härtenden Silikon-Zusammensetzungen ausgewählt werden. Besonders bevorzugt sind Silikon-Zusammensetzungen, die die folgenden Bestandteile aufweisen, bevorzugt, diese bestehen aus:
a) mindestens ein Polyorganosiloxan mit im Mittel mindestens zwei ungesättigten organischen Gruppen pro Molekül,
b) mindestens ein Polyhydrogenorganosiloxan mit im Mittel mindestens zwei SiH-Gruppen pro Molekül,
c) gegebenenfalls einen oder mehrere Füllstoffe,
d) mindestens einen photoaktivierbaren Katalysator, enthaltend ein Metall ausgewählt aus der Gruppe, die besteht aus Pt, Ru, Rh, Pd, Ir oder Ni oder eine Verbindung des genannten Metalls, sowie
e) gegebenenfalls einen oder mehrere Hilfsstoffe.

### Komponente a) (Si-Alkenyl)

In den erfindungsgemäß verwendeten lichtaktivierbaren, härtbaren Siloxanzusammensetzungen hat das alkenylgruppen-haltige Polyorganosiloxan (a) bevorzugt einen Viskositätsbereich von 0,025 und 500 Pa.s, bevorzugt 0,1 bis 100 Pa.s (25 °C; Schergeschwindigkeitsgefälle D von 1 s⁻¹). Es kann aus einem einheitlichen Polymer oder Gemischen verschiedener Polyorganosiloxane, wie verschiedenen im wesentlichen linearen Polymeren (a1) mit geringem Alkenyl-Gehalt oder Gemischen aus den im wesentlichen linearen Polymeren (a1) und bevorzugt verzweigten Polymeren (a2) mit relativ hohem Alkenyl-Gehalt, wie sie weiter unten noch eingehender beschrieben sind, bestehen.

Das Polyorganosiloxan (a) besteht bevorzugt mindestens aus den Siloxaneinheiten, die ausgewählt werden aus der Gruppe, die aus den Einheiten M= R¹R₂SiO_{1/2}, D=R¹RSiO_{2/2}, T=R¹SiO_{3/2}, Q=SiO_{4/2} sowie den zweiwertigen Einheiten R² besteht, worin R, R¹ und R² wie unten definiert sind.

Der Alkenylgruppen-Gehalt liegt bei etwa 0,017 -160 mol.-% bezogen auf Siloxygruppen bzw. 0,002 bis etwa 22 mmol/g für Polymethylvinylsiloxane. Diese können sowohl lineare als auch verzweigte Polyorganosiloxane einschließen. Bevorzugt liegt der Alkenylgruppen-Gehalt bei etwa 0,002 bis etwa 3,0 mmol/g für Polymethylvinylsiloxane bevorzugter zwischen 0,004 bis 1,5 mmol/g dar. Bevorzugt sind die Polyorganosiloxane (a) im Wesentlichen linear, d.h. der Anteil der T- und Q Einheiten liegt bei weniger als 0,1 mol.-%.

Die Polyorganosiloxane (a) können mit der allgemeinen Formel (I) beschrieben werden:

[Mₐ₁D_{b1}T_{c1}Q_{d1}R²ₑ₁]ₘ₁ (I)

worin
M= R¹R₂SiO_{1/2},
D=R¹RSiO_{2/2},
T=R¹SiO_{3/2},
Q=SiO_{4/2},
mit
m1 = 1-1000
a1 = 1-10
b1 = 0-3000
c1 = 0-50
d1 = 0 - 1
e1 = 0 - 300,
worin
R = eine organische Gruppe, bevorzugt unsubstituierte und substituierte Kohlenwasserstoffreste, bevorzugter n-C₁-C₁₂-Alkyl, iso-C₃-C₁₂-Alkyl, tert.-C₄-C₁₂-Alkyl, oder C₁-C₁₂-Alkoxy-(C₁-C₁₂)-alkyl, C₅-C₃₀-Cycloalkyl oder C₆-C₃₀-Aryl, C₁-C₁₂-Alkyl-(C₆-C₁₀)-aryl, wobei diese Reste R gegebenenfalls jeweils durch eines oder mehrere F-Atome substituiert sein können und/oder eine oder mehrere -O-Gruppen enthalten können.

Beispiele für geeignete einwertige Kohlenwasserstoffreste R schließen Alkylgruppen, bevorzugt CH₃-, CH₃CH₂-, (CH₃)₂CH-, C₈H₁₇- und C₁₀H₂₁-Gruppen, cycloaliphatische Gruppen, wie Cyclohexylethyl, Arylgruppen, wie Phenyl, Tolyl, Xylyl, Aralkylgruppen, wie Benzyl und 2-Phenylethylgruppen ein. Bevorzugte einwertige Halogenkohlenwasserstoffreste R haben insbesondere die Formel CₙF₂ₙ₊₁CH₂CH₂-wobei n einen Wert von 1 bis 10 hat, wie z.B. CF₃CH₂CH₂-, C₄F₉CH₂CH₂- and C₆F₁₃CH₂CH₂-. Ein bevorzugter Rest ist die 3,3,3-Trifluorpropylgruppe.

Besonders bevorzugte Reste R schließen Methyl, Phenyl und 3,3,3-Trifluorpropyl ein.

R¹ = R oder ein unsubstituierter oder substituierter C₂-C₁₂-Alkenylrest, mit der Maßgabe, dass mindestens zwei Reste R¹ eine alkenylhaltige organische Gruppe sind, die bevorzugt ausgewählt werden aus: unsubstituierten und substituierten alkenylhaltigen Kohlenwasserstoffresten, wie n-, iso-, tert.- oder cyclisches C₂-C₁₂-Alkenyl, Vinyl, Allyl, Hexenyl, C₆-C₃₀-Cycloalkenyl, Cycloalkenylalkyl, Norbornenylethyl, Limonenyl, C₃-C₃₀-Alkenylaryl, worin gegebenenfalls ein oder mehrere -O-Atome vorliegen können (entsprechend Etherresten) und die durch ein oder mehrere F-Atome substituiert sein können.

Bevorzugte Reste R¹ sind Gruppen wie Vinyl, Allyl, 5-Hexenyl, Cyclohexenylethyl, Limonenyl, Norbornenylethyl, Ethylidennorbornyl und Styryl, besonders bevorzugt ist Vinyl.

R² = ein zweiwertiger aliphatischer n-, iso-, tert.- oder cyclischer C₁-C₁₄-Alkylenrest, oder ein C₆-C₁₄-Arylen- bzw. Alkylenarylrest ist, der jeweils zwei Siloxyeinheiten M, D oder T verbrückt, beispielsweise -D-R²-D-. Dabei wird R² bevorzugt ausgewählt aus zweiwertigen aliphatischen oder aromatischen n-, iso-, tert.- oder cyclischem C₁-C₁₄-Alkylen, C₆-C₁₄-Arylen oder -Alkylenarylgruppen.

Beispiele geeigneter zweiwertiger Kohlenwasserstoffgruppen R², die Siloxyeinheiten überbrücken können, schließen alle Alkylen- und Dialkylarylenreste, bevorzugt diejenigen wie -CH₂-, -CH₂CH₂-, -CH₂(CH₃)CH-, -(CH₂)₄-, -CH₂CH(CH₃)CH₂-, -(CH₂)₆-, -(CH₂)₈- und -(CH₂)₁₈-Cycloalkylengruppen, wie Cyclohexylen, Arylengruppen, wie Phenylen, Xylen ein. Ihr Anteil übersteigt 30 mol.-% aller Siloxy-einheiten im allgemeinen nicht. Bevorzugt sind Gruppen wie alpha,omega-Ethylen, alpha,omega-Hexylen oder alpha,omega-Phenylen.

Die Indices stellen mittlere Polymerisationsgrade dar. Bevorzugt sind die Indices wie folgt und werden zweckmäßig nach Maßgabe der gewünschten Viskosität ausgewählt.

Die zuvor genannten Polyorganosiloxane (a) weisen bevorzugt eine Struktur der allgemeinen Formel (Ia), bevorzugt der Formel (Ia') auf,

R¹R₂SiO(R¹RSiO)_{b1}SiR₂R¹ (Ia),

R¹R₂SiO(R₂SiO)_{b1}SiR₂R¹ (Ia')

worin R und R¹ wie oben definiert sind und b1 < 10000 ist.

Bevorzugte Siloxy-Einheiten in den Polyorganosiloxanen (a) sind beispielsweise Alkenylsiloxyeinheiten, wie Dimethylvinylsiloxy-, Alkylsiloxyeinheiten, wie Trimethylsiloxy-, Dimethylsiloxy- und Methylsiloxy-Einheiten, Arylsiloxyeinheiten wie Phenylsiloxyeinheiten, wie Triphenylsiloxy-Dimethylphenylsiloxy-, Diphenylsiloxy-, Phenylmethylvinylsiloxy-, Phenylmethylsiloxyeinheiten.

Bevorzugt weist das Polyorganosiloxan (a) eine Anzahl der Siloxy-Einheiten von 20 bis 10000, bevorzugt von 100 bis 6000, bevorzugter von 150 bis 3000, besonders bevorzugt 200 bis 1500 auf (Mittlerer Polymerisationsgrad Pₙ).

### Komponente b) (Si-H-haltige Polysiloxane)

Die Polyorganohydrogensiloxane (b) werden bevorzugt ausgewählt aus linearen, cyclischen oder verzweigten SiH-haltigen Polyorganosiloxanen der allgemeinen Formel (II):

[Mₐ₄D_{b4}T_{c4}Q_{d4}R²ₑ₂]ₘ₃

worin
M = R³R₂SiO_{1/2},
D = R³RSiO_{2/2},
T = R³SiO_{3/2},
Q = SiO_{4/2}, worin
R = n-C₁-C₁₂-Alkyl, iso-C₃-C₁₂-Alkyl, tert.-C4-C₁₂-Alkyl, oder C₁-C₁₂-Alkoxy-(C₁-C₁₂)-alkyl, C₅-C₃₀-Cycloalkyl oder C₆-C₃₀-Aryl, C₁-C₁₂-Alkyl-(C₆-C₁₀)-aryl, wobei diese Reste R gegebenenfalls jeweils durch eines oder mehrere F-Atome substituiert sein können und/oder eine oder mehrere -O-Gruppen enthalten können,
R³ = R ist oder Wasserstoff, mit der Maßgabe, dass mindestens zwei Reste R³ je Molekül Wasserstoff sind, wobei beide gleichzeitig in einem Molekül auftreten können, mindestens zwei Reste R³ pro Molekül jedoch Wasserstoff sind, R ist oben definiert, bevorzugt ist R=Methyl.
R² = ein zweiwertiger aliphatischer n-, iso-, tert.- oder cyclischer C₁-C₁₄-Alkylenrest, oder ein C₆-C₁₄-Arylen- bzw. Alkylenarylrest ist, der jeweils zwei Siloxyeinheiten M, D oder T verbrückt,
m3 = 1 bis 1000
a4 = 1 bis 10
b4 = 0 bis 1000
c4 = 0 bis 50
d4 = 0 bis 1
e2 = 0 bis 300.

Die Polyorganohydrogensiloxane (b) sind vorzugsweise lineare, cyclische oder verzweigte Polyorganosiloxane, deren Siloxyeinheiten zweckmäßig ausgewählt werden aus M=R₃SiO_{1/2}, M^{H}=R₂HSiO_{1/2}, D=R₂SiO_{2/2}, D^{H}=RHSiO_{2/2}, T=RSiO_{3/2}, T^{H}=HSiO_{3/2}, Q=SiO_{4/2}, in denen diese Einheiten vorzugsweise aus MeHSiO- bzw. Me₂HSiO_{0,5}-Einheiten neben gegebenenfalls anderen Organosiloxyeinheiten, vorzugsweise Dimethylsiloxyeinheiten, ausgewählt werden.
Die Siloxyeinheiten können blockweise oder statistisch in der Polymerkette miteinander verknüpft vorliegen. Jede Siloxaneinheit der Polysiloxankette kann identische oder unterschiedliche Reste tragen.
Die bevorzugten Polyorganohydrogensiloxane (b) sind Strukturen, die aus der Gruppe ausgewählt werden, die durch die Formeln (IIIa-IIIe) beschrieben werden können

HR₂SiO(R₂SiO)_{z}(RHSiO)ₚSiR₂H (IIIₐ)

HMe₂SiO(Me₂SiO)_{z}(MeHSiO)ₚSiMe₂H (IIIb)

Me₃SiO(Me₂SiO)_{z}(MeHSiO)ₚSiMe₃ (IIIc)

Me₃SiO(MeHSiO)ₚSiMe₃ (IIId)

{[R₂R³SiO_{1/2}]₀₋₃[R³SiO_{3/2}][R⁴O)ₙ₂}ₘ₃ (IIIe)

{[SiO_{4/2}}][R⁴O_{1/2}]ₙ₂[R₂R³SiO_{1/2}]_{0,01-10}[R³SiO_{3/2}]₀₋₅₀[RR³SiO_{2/2}]₀₋₁₀₀₀}ₘ₃ (IIIf)

mit
z = 0 bis 1000
p = 0 bis 100
z+p = b4 = 1 bis 1000
n2 = 0,001 bis 4
worin R⁴O_{1/2} ein Alkoxyrest am Silicium ist,
R³ wie oben definiert ist.

Die SiH-Konzentration der Polyorganohydrogensiloxane (b) liegt bevorzugt im Bereich von 0,1 bis 98 Molprozent, bevorzugt 0,5-95 Molprozent, jeweils bezogen auf die Anzahl der Siloxygruppen.

Beispiele für bevorzugte Strukturen der Komponente (b1) in der erfindungsgemäßen Silikonkautschuk-Zusammensetzung schließen die Kettenverlängerer (b1) wie:

HMe₂SiO-(Me₂SiO)_{z}SiMe₂H

und

Me₃SiO-(Me₂SiO)_{z}(MeHSiO)₂SiMe₃,

[(Me₂SiO)_{z}(MeHSiO)₂]

Me₃SiO-(MeHSiO)ₚSiMe₃,

HMe₂SiO(Me₂SiO)_{z}(MePhSiO)_{z}(MeHSiO)ₚSiMe₂H,

(MeHSiO)ₚ,

(HMe₂SiO)₄Si

MeSi(OSiMe₂H)₃

ein, worin p, z, wie oben definiert sind.

Den SiH-Gehalt bestimmt man in der vorliegenden Erfindung über ¹H-NMR siehe A.L. Smith (Ed.): The Analytical Chemistry of Silicones, J. Wiley & Sons 1991 Vol.112 S. 356 ff. in Chemical Analysis ed. by J.D. Winefordner.

Die bevorzugte Menge der Polyorganohydrogensiloxane (b) liegt bei 0,1 bis 200 Gewichtsteile bezogen auf 100 Gewichtsteile der Komponente (a).

Über das Verhältnis von SiH- zu Si-Alkenyl-Einheiten lassen sich viele Eigenschaften, wie die gummimechanischen Eigenschaften, die Vernetzungsgeschwindigkeit, die Stabilität und die Oberflächenklebrigkeit beeinflussen.

### Komponente c) (Füllstoff)

Die erfindungsgemäß verwendeten Silikonkautschukmischungen enthalten weiterhin wahlweise einen oder mehrere, gegebenenfalls oberflächlich modifizierte Füllstoffe (c). Oberflächlich modifizierte Füllstoffe bedeutet Füllstoffe, die vor oder während des Dispergierens im Polymer (Compoundierungsverfahren) mit Silanen, Silazanen oder Siloxanen hydrophobiert werden. Dabei können auch organofunktionelle Gruppen anwesend sein, die an der Vernetzungsreaktion teilnehmen, also bevorzugt ungesättigte Gruppen wie Vinylgruppen ausfweisen. Bevorzugte Silane, Silazane oder Siloxane weisen darüber hinaus HO-, -NHR, RO-Gruppen am Si- Atom auf, die mit Wasser oder mit der Kieselsäure reagieren können. Die Füllstoffe schließen beispielsweise alle feinteiligen insbesondere oxidischen Füllstoffe ein, d.h. die Partikel kleiner 100 µm (Ausschlußgrenze) aufweisen. Das können mineralische Füllstoffe wie Silikate, Carbonate, Nitride, Oxide, Ruße oder Kieselsäuren sein. Vorzugsweise handelt es sich bei den Füllstoffen um sogenannte verstärkende Kieselsäuren, die die Herstellung opaker, besser transparenter Elastomere erlauben, d.h. solche, die die gummimechanischen Eigenschaften nach Vernetzung verbessern, die Festigkeit erhöhen, wie z.B. pyrogene oder gefällte Kieselsäure mit BET-Oberflächen zwischen 50 und 400 m²/g, die hier bevorzugt in spezieller Weise oberflächlich hydrophobiert sind. Die Komponente (c) wird dann, wenn sie eingesetzt wird, in Mengen von 1 bis 100 Gewichtsteilen, vorzugsweise 10 bis 80 Gew.-teilen, noch bevorzugter 20 bis 60 Gew.-teile, bezogen auf 100 Gewichtsteile der Komponente (a) eingesetzt.

In einer bevorzugten Ausführungsform enthält die erfindungsgemäß verwendete Silikonzusammensetzung mindestens einen verstärkenden Füllstoff (c), insbesondere pyrogene Kieselsäure, mit einer BET-Oberfläche von mehr als 50 m²/g, bevorzugt mehr als 80 m²/g. Die erfindungsgemäß verwendeten lichthärtenden Silikonzusammensetzungen weisen bevorzugt mindestens einen der genannten oxidischen Füllstoffe auf, insbesondere Kieselsäure mit den genannten BET-Oberflächen. Die Wahl der Füllstoffe erfolgt so, dass eine ausreichend schnelle und vollständige Lichthärtung ermöglicht wird. Überraschenderweise führt der Zusatz der genannten oxidischen Füllstoffe bis hinunter zu Transmissionen (Lichtdurchlässigkeit bei 400 nm Wellenlänge und einer Dicke des Prüfkörpers von 10 mm) von weniger als 10 % oder gar weniger als 5 % nicht zu einer Verhinderung der Lichthärtung, sondern Gegenteil scheint der Zusatz der genannten oxidischen Füllstoffe die Härtungsgeschwindigkeit bis in hohe Schichtdicken positiv zu beeinflussen.

### Komponente (d) (Katalysator)

Die Komponente (d), der Hydrosilylierungskatalysator, enthält bevorzugt mindestens ein Metall, das ausgewählt wird aus der Gruppe, die besteht aus Pt, Pd, Rh, Ni, Ir oder Ru, bevorzugt Pt. Der Hydrosilylierungskatalysator kann in metallischer Form, in Form einer Komplex-Verbindung und/oder als Salz verwendet werden. Die Katalysatoren können mit oder ohne Trägermaterialien in kolloidalem oder pulverförmigem Zustand verwendet werden. Beispiele für photoaktivierbare Katalysatoren schließen η-Diolefin-σ-aryl-Platinkomplexe wie in US 4 530 879, EP 122008, EP 146307 oder US 2003-0199603 offenbart, Platindiketonate,wie (Pt(acac)₂), sowie Platinverbindungen mit ein, deren Reaktivität beispielsweise mit Azodicarbonsäureestern, wie in US 4 640 939 offenbart, gesteuert werden kann. Am meisten bevorzugt sind Übergangsmetall-Verbindungen mit mindestens einem sigma-gebundenen Alkyl- oder Arylrest, bevorzugt entsprechende Platinverbindungen, wie optional Alkyl- oder Trialkylsilyl-substitutierte Cyclopentadienyl-tris-alkyl-platin-Verbindungen, Cyclopentadienyl-tris-(triorganosilyl)alkyl-platin-Verbindungen, insbesondere Alkylcyclopentadienyl-trimethyl-platin, wie Methylcyclopentadienyl-trimethyl-platin. Besonders bevorzugte Katalysatoren sind im Hinblick auf ihre Reaktivität und Härtungsgeschwindigkeit: (η⁵-Cyclopentadienyl)-trialkyl-platin-Komplexverbindungen mit (Cp = cyclopentadienyl) wie (Cp)trimethylplatin und (Methyl-Cp)trimethylplatin. Die Menge der Komponente (d) liegt bevorzugt bei 0,1-5000 ppm, bevorzugt 0,5-1000 ppm, bevorzugter 1-500 ppm, besonders bevorzugt 2-100 ppm, gerechnet als Metall, bezogen auf das Gewicht der Komponenten (a) bis (c) vor.

### Hilfsstoffe (e)

### Inhibitoren

Die Geschwindigkeit der Hydrosilylierungsreaktion läßt sich bekanntlich durch eine Reihe von zusätzlichen Verbindungen, den sogenannten Inhibitoren (e) beeinflussen. Damit kann man weiteren Einfluß auf die Vernetzungsgeschwindigkeit nach Photoaktivierung nehmen, d.h. man bestimmt, bei welcher Temperatur und in welcher Zeit die Silikonzusammensetzung bzw. Kautschukmischung nach der Photoaktivierung zu einem elastomeren Formkörper aushärtet bzw. vulkanisiert. Zweckmäßige Inhibitoren für die erfindungsgemäß photoaktivierbare Hydrosilylierung bei Platinkonzentrationen über 30 ppm Platin sind Inhibitoren, wie Vinylsiloxane, 1,3-Divinyltetramethyldisiloxan oder Tetravinyltetramethyltetracyclosiloxan. Auch andere bekannte Inhibitoren wie beispielsweise Ethinylcyclohexanol, 3-Methylbutinol oder Dimethylmaleat können verwendet werden. Die Inhibitoren dienen dazu, nach Photoaktivierung die Vernetzungsreaktion in gewünschter Weise zu verzögern. Grundsätzlich können alle für die Klasse der Gruppe der Platinmetalle bekannten Inhibitoren eingesetzt werden, soweit nicht schon durch Auswahl der Liganden des Katalysators (d) eine ausreichend lange Verarbeitungszeit erzielt wird. Eine bevorzugte Ausführungsform ist es, den Katalysator ohne den Inhibitor einzusetzen. Falls die Inhibitorkomponente angewendet wird, werden bevorzugt etwa 0,001 bis 0,5 Gew.%, besonders bevorzugt 0,05 bis 0,2 Gew.% insbesondere der Alkinole bei Metallgehalten der Komponente (d) von 10 bis 100 ppm zudosiert. Die Gesamtmenge der möglichen Hilfsstoffe (e) beträgt bevorzugt 0 bis 15 Gewichtsteile bezogen auf 100 Gewichtsteile der Komponente (a) und (b).

Als Hilfsstoffe können auch Photosensibilisatoren eingesetzt werden, um in dünnen Schichten die Lichtausbeute zu erhöhen.

### Haftvermittler

Geeignete Haftvermittler schließen beispielsweise ein:
(1): mindestens ein Organosiloxan, welches mindestens eine Alkoxysilylgruppe aufweist,
(2): mindestens ein Organosilan, welches mindestens eine Alkoxysilylgruppe aufweist,
(3): mindestens eine aromatische organische Verbindung, die mindestens zwei aromatische Gruppen und mindestens eine Gruppe, die in der Hydrosilylierungsreaktion reaktiv ist, aufweist.

Haftvermittlungs-Komponente (1) ist bevorzugt ein Polyorganosiloxan, das mindestens eine Einheit ausgewählt aus der Gruppe die besteht aus:

RHSiO_{2/2}

und

R⁵(R)SiO_{2/2},

worin R wie oben definiert ist und gleich oder verschieden sein kann und R⁵ aus der Gruppe ausgewählt wird, die besteht aus: ungesättigten aliphatischen Gruppen mit bis zu 14 Kohlenstoffatomen, Epoxy-Gruppen-enthaltende aliphatischen Gruppen mit bis zu 14 Kohlenstoffatomen, Cyanurate-enthaltende Gruppen und Isocyanurate-enthaltende Gruppen,
und weiterhin mindestens einer Einheit der auf folgende Formel aufweisen:

O_{2/2}(R)Si-R⁴-SiR_{d}(OR³)_{3-d} (3)

worin
R wie vorstehend definiert ist,
R³ ausgewählt wird aus H (Wasserstoff) und Alkylradikalen mit 1-6 Kohlenstoffatomen,
R⁴ ein bifunktionelles wahlweise substituiertes Kohlenwasserstoffradikal mit bis zu 15 Kohlenstoffatomen ist, dass ein oder mehrere Heteroatome aufweisen kann, ausgewählt aus O, N und S Atomem, und das an die Siliziumatome über eine Si-C Bindung gebunden ist, und worin
d 0 to 2 ist.
Ein bevorzugtes Beispiel ist:

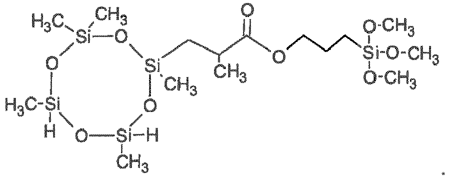

Haftvermittlungs-Komponente (2) wird bevorzugt ausgewählt aus Verbindungen der Formel:

X-(CR⁶₂)ₑ-Y-(CH₂)ₑSiR_{d}(OR³)_{3-d}

worin
X ausgewählt wird aus der Gruppe die besteht aus: Halogen, Pseudohalogen, ungesättigte aliphatische Gruppen mit bis zu 14 Kohlenstoffatomen, Epoxy-Gruppen enthaltende aliphatischen Gruppen mit bis zu 14 Kohlenstoffatomen, Cyanurat-enthaltende Gruppen und Isocyanurate-enthaltende Gruppen,
Y ausgewählt wird aus der Gruppe die besteht aus: Einfachbindung, Heteroatomenthaltende Gruppe ausgewählt aus: -COO-, -O-, -S-, -CONH-, -HN-CO-NH-,
R⁶ ausgewählt wird aus Wasserstoff und R, das wie oben definiert ist,
e ist: 0, 1, 2, 3, 4, 5, 6, 7, or 8, und kann gleich oder verschieden sein,
R ist wie oben definiert und kann gleich oder verschieden sein,
R³ ist wie oben definiert und kann gleich oder verschieden sein,,
d ist 0, 1, oder 2.
Bevorzugte Beispiele schließen ein: 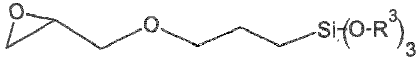 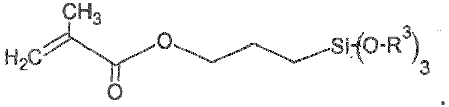 Eine weitere Gruppe der Haftvermittlungs-Komponente (3) wird bevorzugt ausgewählt aus Verbindungen der Formel: 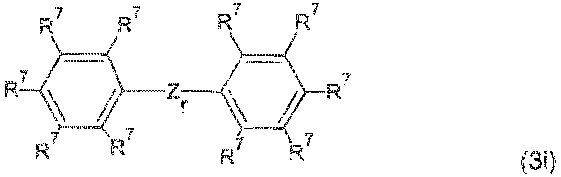 worin
r ist 0 oder 1,
R⁷ gleich oder verschieden sein kann und aus der Gruppe ausgewählt wird, die besteht aus: Wasserstoffatom, Hydroxy-Gruppe,Halogen Alkylgruppe, Alkenylgruppe, Alkoxygruppe, Alkenyloxygruppe, Alkenylcarbonyloxygruppe und einer Arylgruppe, und
eine Gruppe der Formel: -E_{f}-Si(OR)_{3-d}R_{d}, worin R gleich oder verschieden ist und d wie oben definiert ist,
eine Gruppe der Formel -O-Si(R)₂R¹, worin R und R¹ wie oben definiert sind, ,
eine Gruppe der Formel -E_{f}-Si(R)₂H, worin R wie oben definiert ist,
worin E eine divalente organische Gruppe mit bis zu acht Kohlenstoffatomen und 0 to 3 Heteroatom-Gruppen ausgewählt aus: -O-, -NH-, C=O, und -C(=O)O-, und
f ist 0 oder 1,
und Z aus folgenden Gruppen ausgewählt ist: 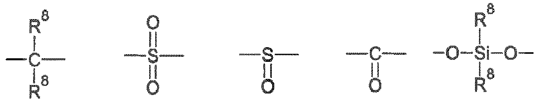 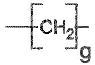 oder -o-
   worin R⁸ ausgewählt ist aus der Gruppe, die besteht aus: Wasserstoffatom, Halogenatom oder eine substitutierte oder unsubstitutierte Alkylgruppe, Arylgruppe, Alkenylgruppe und Alkynylgruppe, und
   g eine positive Zahl von mindestens 2 ist,
   worin mindestens eine der Gruppen ausgewählt aus R⁷ und R⁸ in der Hydrosilylierungsreaktion reaktiv ist.
Eine bevorzugte Komponente (3) schließt ein: 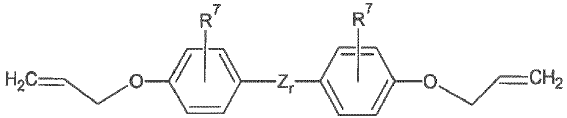 worin Zᵣ, R⁷, R³, R und d jeweils wie oben definiert sind.

Eine bevorzugte lichthärtenden Silikon-Zusammensetzung enthält:
3 bis 99 Gew.-% wenigstens ein alkenylgruppen-haltiges Polysiloxan a),
0,2 bis 60 Gew.-% wenigstens ein SiH-funktionelles Polysiloxan b),
0,1 bis 60 Gew.-%, bevorzugter 5 bis 50 Gew.-% wenigstens einen Füllstoff c), bevorzugt ein oxidischer Füllstoff, wie pyrogene Kieselsäure,
wenigstens einen photoaktivierbaren Katalysator d), entsprechend einem Metallgehalt von 1 bis 500 ppm,
0 bis 30 Gew.-% eines oder mehrerer Hilfsstoffe e),
jeweils bezogen auf die Gesamtmenge der Komponenten a) bis c).
In einer bevorzugten Ausführungsform enthält die erfindungsgemäß verwendete Silikonzusammensetzung:
a) 100 Gewichtsteile mindestens eines alkenylgruppenhaltigen Polyorganosiloxans mit einem Viskositätsbereich von 0,025 und 500 Pa.s (25°C; Schergeschwindigkeitsgefälle D von 1 s⁻¹),
b) von 0,1 bis 200 Gewichtsteile mindestens eines Polyorganohydrogensiloxans, wobei 0,5 bis 20 mol, bevorzugt 1 bis 5 mol der SiH-Gruppen pro mol der Alkenylgruppen eingesetzt werden,
c) gegebenenfalls von 1 bis 100 Gewichtsteile eines oder mehrerer Füllstoffe,
d) von 0,5 bis 1000 ppm mindestens eines Hydrosilylierungskatalysators berechnet als Metall bezogen auf die Menge der Komponenten (a) bis (c),
e) gegebenenfalls von 0,0001 bis 2 Gew. % eines oder mehrerer Inhibitoren bezogen auf die die Menge der Komponenten (a) bis (c), und gegebenenfalls weitere Hilfsstoffe.

Die Anwendung der erfindungsgemäß verwendeten Silikonkautschuk-Zusammensetzungen ist erhältlich durch das Vermischen der Komponenten (a) bis (e), wobei zweckmäßig die Stoffe in bevorzugten Folgen vereinigt und vorzugsweise mindestens zwei Teilmischungen unmittelbar vor der Aktivierung vereinigt werden.
In einer bevorzugten Ausführungsform des erfindungsgemäßen Verfahrens ist die Silikonzusammensetzung nach Photoaktivierung von 0,01 bis 240 sec innerhalb von weniger als 6 min, bevorzugt weniger als 5 min noch bevorzugter weniger als 4 min härtbar. Die Photoaktivierung erfolgt mit Licht einer Wellenlänge im Bereich von 200 bis 500 nm (UV-Wellenlängenbereich). In dem erfindungsgemäßen Verfahren wählt man für die Lichtaktivierung beispielsweise eine UV-Strahlenquelle aus der Gruppe der UV-Strahler wie Xenonlampen die als Blitzlichtlampen betrieben werden können, undotierte oder mit Eisen oder Gallium dotierte Quecksilberlampen, Schwarzlicht- und Eximerlampen sowie LED-UV-Lampen.

Die erfindungsgemäß hergestellten Verbund-Formkörper weisen bevorzugt einen innenliegenden Kern aus dem ausgewählten thermoplastischem Harz mit außen befindlicher Hülle oder geformeten Elementen aus Silikonelastomer auf. Es ist jedoch auch möglich nach dem erfindungsgemäßen Verfahren Verbundformkörper herzustellen, bei denen das thermoplastischem Harz außen angeordnet ist und das Silikonelastomer sich innen befindet, wie beispielsweise bei Dämpfungselementen, bei denen sich zum Beispiel ein Kern des Silikonelastomers in einem thermoplastischen Kissen befindet. Letztere Ausführungsform ist insbesondere dann zugänglich, wenn das thermoplastische Polymer/Harz die zur Härtung der lichthärtenden Silikon-Zusammensetzung erforderlichen Strahlen durchläßt.

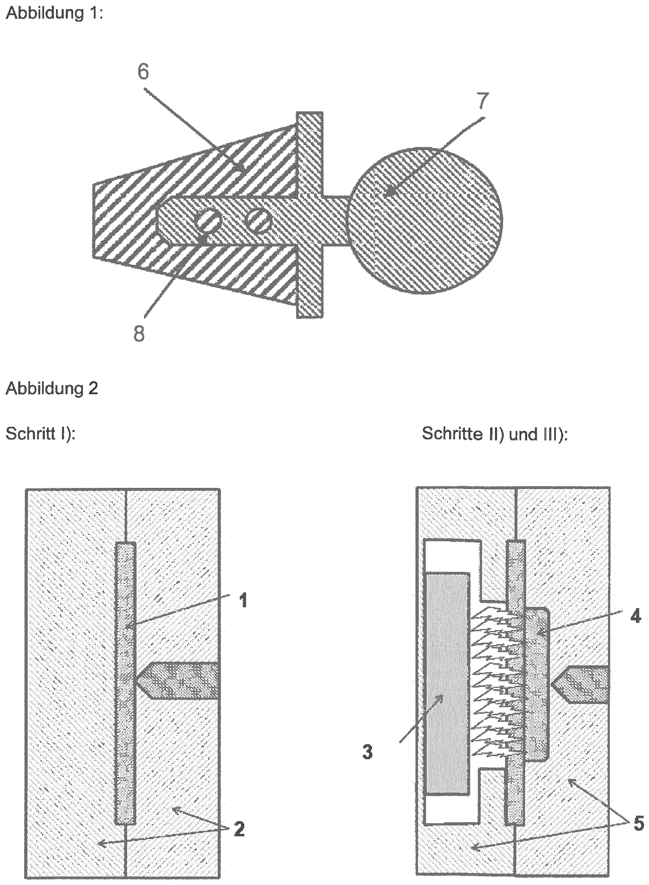

In einer anderen bevorzugten Ausführungsform des Verfahrens wird zunächst ein Formteil in einem Schritt I) aus einem weitgehend das UV-Licht durchlässigen Thermoplast bei 20-200 °C und einem Druck von 1- 400 bar gespritzt. Dieses so erhaltene Formteil wird bei Raumtemperatur oder oberhalb davon (20 bis 200 °C bevorzugt 30-150 °C) bis zur Dauer der Entformung des Fertigteiles in Schritt IV) aus Thermoplast und Silikon fixiert, wobei gegebenenfalls auf eine Formtemperatur unter 200 °C gekühlt wird. Im nachfolgenden Schritt II) wird die lichthärtende Silikonzusammensetzung bei kontrolliertem Druck auf die dem Formennest zugewandte Seite des Formteiles aus thermoplastischem Harz gespritzt. Der Einspritzdruck für die lichthärtende Silikonzusammensetzung liegt bei 1- 400 bar bevorzugt bei 1-200 bar noch mehr bevorzugt bei 1- < 30 bar. Die Massetemperatur liegt bevorzugt unterhalb der Gleichgewichtsschmelztemperatur Tₘ, hier der Erweichungstemperatur (gemessen als Deflection Temperatur bei 5 N) des Harzformteiles. Die Silikonzusammensetzung wird bevorzugt bei einer Temperatur, die bevorzugt 10 °C, noch mehr bevorzugt mehr als 20 °C unterhalb der Erweichungstemperatur des Harzformteiles liegt, eingespritzt. Typischerweise wird Schritt II) bevorzugt bei Temperaturen von weniger als 90 °C noch bevorzugter weniger als 80 °C durchgeführt (siehe Abb. 2).

In einem weiteren Schritt III) bestrahlt man die lichthärtende Silikonzusammensetzung durch dieses Formteil aus thermoplastischem Harz zweckmäßig mit Licht der Wellenlänge 190 - 600 nm sowie bevorzugt mit einer spezifischen Leistung von 0,1 - 100 Watt/cm² über zweckmäßig 1-500 sec, bevorzugt < 200 sec, um die Härtung der Silikonzusammensetzung zu erreichen. Bevorzugt erfolgt die Bestrahlung mit einer spezifischen Einstrahlungsenergie von 1-50 J/cm² bei den genannten Temperaturen.
Die Entformung des Verbundteiles aus thermoplastischem Harz und gehärteter Silikonzusammensetzung aus dem Formennest erfolgt in einem nächsten Schritt IV) wahlweise unter Mitwirkung von Auswerfern oder Pressluft.
Die Abbildung 2 zeigt schematisch das vorstehend beschriebene Verfahren. Schritt I) zeigt die Erzeugung des thermoplastischen Formteils. Schritte II) und III) zeigt die Bestrahlung der Silikonzusammensetzung durch das thermoplastische Formteil. Schritt I) und die Folgeschritte können gegebenenfalls in einem Formwerkzeug unter Verwendung variabler Formennester durchgeführt werden.
Die Bezugszeichen werden nachstehend erläutert:
1: UV-lichtdurchlässiges Kunststoff-Formteil,
2: Formwerkzeug für lichtdurchlässiges Formteil,
3: LED-UV-Lichtquelle,
4: UV-vernetzendes Silikon und
5: Formwerkzeug für UV-vernetzbares Silikon.

Abbildung 1 zeigt ein Beispiel eines erfindungsgemäß hergestellten Formteils. Die Bezugszeichen bedeuten:
6: gehärtete Silikonzusammensetzung
7: Formteil aus thermoplastischem Harz
8: Durchbrüche für mechanische Verbindung bzw. Verankerung

In dem erfindungsgemäßen Verfahren sind das thermoplastische Formteil und die gehärteten Silikonzusammensetzung durch mechanische Kräfte bzw. Elemente verbunden. Prinzipiell kann der Verbund zwischen dem thermoplastischen Formteil und dem Silikonelastomer-Formteil durch Haftung bzw. Adhäsion zwischen den beiden Formteilen und/oder durch mechanische Verbindung der beiden Formanteile bewirkt werden. Im letzteren, erfindungsgemäßen Fall wird durch Wahl einer geeigneten Geometrie der Formteile, insbesondere des vorher gefertigten thermoplastischen Formkörperanteils, beispielsweise durch Aussparungen, wie zum Beispiel in Form von Gewinden, Ankern, Widerhaken, Befestigungselementen im thermoplastischen Formteil eine feste Verbindung zu dem Silikonelastomer-Formkörperanteil erzeugt (vergleiche Abbildung 1). Im ersteren Fall wären verschiedene Maßnahmen geeignet, die Adhäsion zwischen thermoplastischem Formkörperanteil und Silikonelastomer-Formkörperanteil zu fördern, wobei diese Maßnahmen einzeln oder in Kombination angewendet werden können. So könnten der durch Adhäsionskräfte verbundenen lichthärtenden Silikon-Zusammensetzung beispielsweise die zuvor beschriebenen Haftvermittler zugesetzt werden, oder die Oberfläche des thermoplastischen Formkörperanteils kann durch geeignete Maßnahmen, wie Ätzen, Plasmabehandlung, Beflammung, Beschichtung durch so genannte Primer, vorbehandelt werden. In einer Ausführungsform des erfindungsgemäßen Verfahrens sind das thermoplastische Formteil und die gehärteten Silikonzusammensetzung lösbar miteinander verbunden. Dies ist beispielsweise vorteilhaft, wenn die erfindungsgemäß hergestellten Verbundformkörper recycelt werden sollen.
Nach dem erfindungsgemäßen Verfahren können vielfältige Verbund-Formkörper aus thermoplastischem Formkörperanteil und Silikonelastomer-Formkörperanteil auf verschiedenen Anwendungsgebieten in einfacher Weise hergestellt werden. Beispiele der erfindungsgemäß hergestellten Hart-Weich-Formteile schließen ein: Dichtungen im Maschinenbau, Automobilanwendungen, wie Lüfterklappen mit Silikonlippe, Tastschalter für pneumatische Zentralverriegelungen, Elektroartikel, wie Isolatoren, Hohlrohrisolatoren (Silikonlamellen auf PE- oder PP-Rohren) Tastaturen für elektronische Geräte, Lebensmittelverpackungen, wie zum Beispiel Flaschenverschlüssen oder Stopfen, wie Weinflaschenverschlüsse, Sektflaschenverschlüsse, Bierflaschenverschlüsse, wie Korken, Kaffeekapseln, Verschluß- und Dosierkappen-bzw. Ventile mit elastischen Dichtlippen, Lebensmittelbehälter oder Boxen (Silikondichtungen in/auf Thermoplastbehältern), Küchengeräte, wie Teigschaber, Tauchermasken, Gesichtsmasken, Beißringe, Babysauger (Schnuller), thermoplastische Seifenschalen aus Acrylat oder PVC mit einem elastomeren Bodenteil aus lichthärtbarem Silikon (siehe Abb. 2), 'Erwachsenen-Spielzeuge', wie Vibratoren, Dildos, Buttplugs und Penisringe, Möbel, Ablagen, mit Siliconelastomeren haptisch gestaltete Designobjekte, Applikationen für Texilien oder Schuhe, Markenembleme, Sport- und Freizeitartikel wie Uhrarmbänder, Werkzeuge, Werkzeuggriffe, insbesondere in der Küchen- und Medizintechnik, elastische Rutschbremsen bzw. Stapelhilfen bei Tellern, Schalen, Spritzenkolben, Intravenös-Ventile, Schaber oder Spatel, Implantate, Schläuche oder Ventile, gegegbenenfalls mit integrierten Flanschstücken, Schläuche mit integrierten Rohrbögen beispielsweise für Haushalt und Medizintechnik.
Es gibt verschiedene Vorgehensweisen, wie die erfindungsgemäßen Verbund-Formkörper hergestellt werden können. Zu unterscheiden sind insbesondere solche Verfahren, worin das thermoplastische Formteil erst in der Form erzeugt wird, beispielsweise durch Spritzguss, oder die Verfahren, worin das vorgefertigte thermoplastische Formteil in die Form gegeben wird, die anschließend mit der lichthärtenden Silikonzusammensetzung gefüllt und schließlich mit vorzugsweise UV-Licht bestrahlt wird, unter Bildung der erfindungsgemäßen Verbund-Formkörper. Grundsätzlich ist das erfindungsgemäße Verfahren sowohl kontinuierlich, beispielsweise in einem Strangpressverfahren, als auch diskontinuierlich durchführbar. Im ersteren Fall wird beispielsweise ein thermoplastisches Formelement, wie beispielsweise ein Schlauch, ein Strang oder ein Rohr, kontinuierlich erzeugt, welches nach ebenfalls kontinuierlichem Auftragen der Silikon-Zusammensetzung an einer Belichtungsstation vorbeigeführt wird, und anschließend beispielsweise aufgewickelt und-/oder in geeignete Abschnitte geschnitten wird. Oder das bereits vorgefertigte thermoplastische Formelement, wird diskontinuierlich oder kontinuierlich in eine Form bzw. Form-Werkzeug eingeführt, und nach kontinuierlichem Auftrag der lichthärtenden Silikonzusammensetzung, an einer Belichtungsstation gehärtet, und der resultierende Verbund-Formkörper wird kontinuierlich entnommen und aufgearbeitet.
Bevorzugter wird jedoch eine bestimmte Form bzw. Form-Werkzeug entweder mit einem vorgefertigten thermoplastischen Formelement beladen, in die anschließend die lichthärtenden Silikon-Zusammensetzung gegeben wird und durch UV-Strahlung gehärtet wird. Anschließend wird der entstandene Verbundkörper entnommen, und der Vorgang wiederholt (diskontinuierliche Fahrweise). Alternativ wird das thermoplastische Formelement zum Beispiel durch Spritzgießen in einer gemeinsamen Form bzw. Form-Werkzeug zuvor erzeugt.
Die in dem erfindungsgemäßen Verfahren verwendeten Formen müssen selbstredend mindestens einen für die Strahlung durchlässigen, d.h. transparenten Bereich aufweisen, der aus Quarzglas oder einem Kunststoff wie PMMA bestehen kann.
Die nach dem erfindungsgemäßen Verfahren erhaltenen Verbund-Formkörper können auch dickwandige Verbundformkörper sein, die - auch im Bereich des Silikonelastomers - Dicken von mindestens 3 mm, bis zu beispielsweise etwa 100 mm aufweisen. Bevorzugter weisen die erfindungsgemäß hergestellten Verbundformkörper in allen drei Dimensionen mindestens Dicken von 3 mm und mehr, bevorzugter mindestens 10 mm bis beispielsweise etwa 100 mm auf. Demnach weisen die erfindungsgemäßen Verbund-Formkörper solche Dimensionen auf, die geeignet sind, mindestens eine Kugel mit einem Durchmesser von mindestens 3 mm, bevorzugter mindestens 10 mm, noch bevorzugter mindestens 20 mm aufzunehmen. Dies gilt auch für den gehärteten Silikonanteil der ebenfalls solche Dimensionen aufweisen kann, die geeignet sind, mindestens eine Kugel mit einem Durchmesser von mindestens 3 mm, bevorzugter mindestens 10 mm, noch bevorzugter mindestens 20 mm aufzunehmen.

Das Einspritzen der Thermoplastschmelzen erfolgt zweckmäßig bei Schneckentemperaturen von 180 -350 °C (LDPE - PA Typen oder PEEK) und einem Druck von 250 - 2500 bar in Kavitäten bzw. Formnester, die eine Temperatur von 15 - 160 °C aufweisen.
Die Kunststoffschmelze erstarrt hierin unter Abkühlung in einigen Sekunden pro mm Wandstärke und kann dann entformt werden und weiterverarbeitet werden.

Den lichthärtbaren Silikon-Flüssigkautschuk (LSR) spritzt man zweckmäßig bei 50 - 1000 bar und einer Schneckentemperatur 20- 35 °C (LSR) bzw. 35-75 °C (hochviskoser Si-Festkautschuk) ein, wobei die Kavität eine Temperatur von 15 - 80 °C aufweist.
Als geeignete Bestrahlungszeiten mit UV-Licht wählt man zweckmäßig Zeiten zwischen 5 - 300 sec bei einer flächenbezogenen Leistungen von 1- 50 W.cm⁻² und Wellenlängen von 190- 400 nm aus.
Die Erfindung wird durch nachstehende Beispiele veranschaulicht.

### Beispiele

### Materialien

Material 1: PP Moplen HP400M, Erweichungstemperatur 96 °C (als Deflection Temp. bei 5 N)
Material 2 : Lichtaktivierbare Siliconzusammensetzung.

In einem Kneter werden 14,1 Gew.-teile Dimethylvinylsiloxy-endgestopptes Polydimethylsiloxan (a1) mit einer Viskosität von 10 Pa.s bei 25 °C M^{Vi}₂D₅₃₉, 25,6 Gew.-teile Dimethylvinylsiloxy-endgestopptes Polydimethylsiloxan (a1) mit einer Viskosität von 65 Pa.s bei 25 °C, 3,9 Teile Hexamethyldisilazan, 0,03 Gew.-teile 1,3-Divinyltetramethyldisilazan und 2,1 Gew.- teile Wasser gemischt. Anschließend wurden
18 Gew.teile pyrogener Kieselsäure (c) mit einer BET-Oberfläche von 300 m²/g eingemischt, auf ca. 100 °C erwärmt und ca. eine Stunde gerührt und danach bei 150 °C bis 160 °C von Wasser und überschüssige Silazan-/Silanolresten durch Verdampfen entfernt (zum Schluß Vakuum bei p = 20 mbar).

Anschließend verdünnt man mit 33,4 Gew.-teilen eines Dimethylvinylsiloxy-endgestoppten Polydimethylsiloxans (a1) mit einer Viskosität von 10 Pa.s.

Zu 93,2 Gew.-teilen dieser Mischung gab man unter Rühren mit einem Zweiwellen Küchenmixer (Krups) bei 25 °C 10,4 Gew.-teile eines SiH-Vernetzers (Komponente b)) bestehend aus einem Dimethylhydrogensiloxy-endgestopptem Polydimethylhydrogenmethylsiloxan und einem SiH-Gehalt von 2,3 mmol/g mit einer Viskosität von 40 mPa.s bei 25 °C der allgemeinen Formel M₂D₁₀₀D^{H}₂₀.

Anschließend rührte man unter Gelblicht (Ausschluß von Licht < 550 nm) mit einem Küchenmixer 2 Gew.teile des lichtaktivierbaren Katalysators über 5 min ein. Dieser Katalysator bestand aus 2000 Gew.teilen eines linearen vinylendgestoppten Polydimethylsiloxans mit der Viskosität 10 Pa.s bei 25 °C mit einem Vinylgehalt von 0,05 mmol/g und 1 Gew.-teil Trimethyl(methylcyclopentadienyl)-platin (Fa. Strem) mit einem Platingehalt von 61,1 %. Mit dieser Menge stellt man einen Platingehalt von 6,4 ppm in der reaktiven Mischung des Materials 2 ein.

### Beispiel 1 Herstellung eines Kompositteiles aus PP und Silkon

In eine Zweikomponentenform, die an einen Spritzgießautomaten der Fa. Engel Typ LIM 200 angeschlossen ist, führt man Polypropylen Material 1 bei einer Schneckentemperatur von 200 °C und einem Druck von 1000 bar ein. Das PP wird in die Form gespritzt, die eine Temperatur von 35 °C hatte und darauf in 60 sec heruntergekühlt. Das erhaltene Formteil (Ausziehöse) setzte man mit einem Handhabungsroboter in die für das Siliconelastomer vorbestimmte Kavität (Formnest) ein und spritzte innerhalb von 0,5 sec 4 g lichthärtbares Siliconemischung des Materials 2 bei 35 °C bei 100 bar ein. Mit einer UV-Lampe des Typs Phoseon bestrahlte man durch ein Fenster aus UV transparentem Polymethylacrylat (PMMA) von 4 cm² diese Kavität mit der lichtaktivierbaren Silicone-Elastomerzusammensetzung mit UV-Licht der Wellenlänge 365 nm mit einer mit einer flächenbezogenen Leistung von 4 W/cm² über 15 sec im Abstand von 1,5 cm.

Das PP-Formteil war hier als Ausziehöse mit Öffnungen im einzubettenden Teil zum Hinterspritzen mit dem Siliconelestomer und dessen mechanischer Verankerung ausgeformt, wie in Abb. 1 dargestellt.

Nach Umspritzen und Aushärten des Siliconelastomers erhielt man einen Verschlußstopfen für Getränkeflaschen wie schematisch in Abb. 1 gezeigt, der der Form entnommen werden konnte.

## Patentansprüche

1. Verfahren zur Herstellung von Kunststoff-Verbundformkörpern, welches die Schritte umfasst:
a) Bereitstellen eines Formteils aus einem thermoplastischen Harz in einer Form,
b) Einführen einer lichthärtenden Silikonzusammensetzung in die genannte Form, welche das genannte Formteil enthält,
c) Bestrahlen der lichthärtenden Silikonzusammensetzung mit Licht einer zur Härtung der Silikonzusammensetzung geeigneten Wellenlänge, unter Bildung eines Verbundformkörpers aus dem genannten Formteil und der gehärteten Silikonzusammensetzung,
worin das in Schritt a) verwendete Formteil aus Polypropylen ist, und eine solche Geometrie aufweist, die eine feste Verbindung zu der gehärteten Silikonzusammensetzung erzeugt, so dass das thermoplastische Formteil und die gehärtete Silikonzusammensetzung mechanisch verbunden sind.

2. Verfahren nach einem oder mehreren der vorgehenden Ansprüche, worin das Polypropylen eine Wärmeformbeständigkeitstemperatur (HDT) nach DIN EN ISO 75-1,-2 von weniger als 160 °C aufweist.

3. Verfahren nach einem oder mehreren der vorgehenden Ansprüche, worin die lichthärtenden Silikonzusammensetzung ausgewählt wird aus der Gruppe der durch Hydrosilylierung härtenden Silikonzusammensetzungen.

4. Verfahren nach einem oder mehreren der vorgehenden Ansprüche, worin die lichthärtenden Silikonzusammensetzung ausgewählt wird aus der Gruppe der durch Hydrosilylierung härtenden Silikonzusammensetzungen, die besteht aus:
a) mindestens ein Polyorganosiloxan mit im Mittel mindestens zwei ungesättigten organischen Gruppen pro Molekül,
b) mindestens ein Polyhydrogenorganosiloxan mit im Mittel mindestens zwei SiH-Gruppen pro Molekül,
c) gegebenenfalls einen oder mehrere Füllstoffe,
d) mindestens einen photoaktivierbaren Katalysator, enthaltend ein Metall ausgewählt aus der Gruppe, die besteht aus Pt, Ru, Rh, Pd, Ir oder Ni oder eine Verbindung des genannten Metalls, sowie
e) gegebenenfalls einen oder mehrere Hilfsstoffe.

5. Verfahren nach einem oder mehreren der vorgehenden Ansprüche, worin der Verbund-Formkörper ausgewählt wird aus der Gruppe, die besteht aus Hart-Weich-Formteile für Dichtungen im Maschinenbau, Automobilanwendungen, Elektroartikel, wie Isolatoren, Tastaturen, Lebensmittelverpackungen, wie zum Beispiel Flaschenverschlüssen Kaffeekapseln, Verschluß- und Dosierkappen-bzw. Ventile, Lebensmittelbehälter, Küchengeräte, wie Teigschaber, Teller, Schalen, Tauchermasken, Gesichtsmasken, Beißringe, Babysauger, Vibratoren, Dildos, Buttplugs, Penisringe, Möbel, Ablagen, mit Siliconelastomeren haptisch gestaltete Designobjekte, Applikationen für Texilien oder Schuhe, Markenembleme, Sport- und Freizeitartikel wie Uhrarmbänder, Werkzeuge, Werkzeuggriffe Spritzenkolben, Intravenös-Ventile, Schaber oder Spatel, Implantate, Schläuche oder Ventile gegebenenfalls mit integrierten Flanschstücken, Schläuche mit integrierten Rohrbögen.

6. Verfahren nach einem oder mehreren der vorgehenden Ansprüche, worin das thermoplastische Formteil und die gehärtete Silikonzusammensetzung lösbar miteinander verbunden sind.

7. Verfahren nach einem oder mehreren der vorgehenden Ansprüche, worin das thermoplastische Formteil erst in der Form erzeugt wird.

8. Verfahren nach einem oder mehreren der vorgehenden Ansprüche, worin das thermoplastische Formteil bereits fertig geformt in die Form gegeben wird.

9. Verfahren nach einem oder mehreren der vorgehenden Ansprüche, welches diskontinuierlich durchgeführt wird.

10. Verfahren nach einem oder mehreren der vorgehenden Ansprüche, worin der Formkörper solche Dimensionen aufweist, die geeignet sind, mindestens eine Kugel mit einem Durchmesser von mindestens 3 mm aufzunehmen.

11. Verfahren nach einem oder mehreren der vorgehenden Ansprüche, worin der gehärtete Silikonteil solche Dimensionen aufweist, die geeignet sind, mindestens eine Kugel mit einem Durchmesser von mindestens 3 mm aufzunehmen.

12. Verfahren nach einem oder mehreren der vorgehenden Ansprüche, **dadurch gekennzeichnet, dass** die lichthärtende Silikonzusammensetzung durch das thermoplastische Formteil bestrahlt wird.

## Claims

1. A process for the production of plastic composite molded bodies, comprising the steps of:
a) Providing a formed body made of a thermoplastic resin in a mold,
b) adding a light-curable silicone composition into said mold containing said formed body,
c) irradiating the light-curable silicone composition with light having an appropriate wave length for curing the silicone composition under formation of a composite molded body from said formed body and the cured silicone composition,
wherein the formed body used in step a) is made of polypropylene, and is of such a geometry that produces a permanent joint to the cured silicone composition, such that the thermoplastic formed body and the cured silicone composition are connected mechanically.

2. Process according to the previous claim, wherein the polypropylene has a heat deflection temperature (HDT) according to DIN EN ISO 75-1,-2 of less than 160 °C.

3. Process according to one or more of the previous claims, wherein the light-curable silicone composition is selected from the group of silicone compositions curable by hydrosilylation.

4. Process according to one or more of the previous claims, wherein the light-curable silicone composition is selected from the group of silicone compositions curable by hydrosilylation, which consist of:
a) at least one polyorganosiloxane with at least two unsaturated organic groups per molecule in the average,
b) at least one polyhydrogenorganosiloxane with at least two SiH-groups per molecule in the average,
c) optionally one or more fillers,
d) at least one photoactivatable catalyst, containing a metal selected from the group consisting of Pt, Ru, Rh, Pd, Ir or Ni or a compound of said metals, and
e) optionally one or more auxiliaries.

5. Process according to one or more of the previous claims, wherein the plastic composite molded body is selected from the group consisting of hard-soft-formed bodies for seals in mechanical engineering, automotive applications, electrical goods, as isolators, keypads, food packages, as for instance bottle caps, coffee capsules, closing caps and dosing caps or vents, respectively, food containers, kitchen ware, as dough scrapers, plates, bowls, diving masks, face masks, teething rings, baby teats, vibrators, dildos, buttplugs, penis rings, furniture, shelves, design objects haptically designed with silicone elastomers, applications for textiles or shoes, brand emblems, sports and leisure articles such as watch straps, tools, tool handles, syringe pistons, intravenous valves, scrapers or spatulas, implants, tubes or valves, optionally with integrated flange pieces, tubes with integrated pipe bends.

6. Process according to one or more of the previous claims, wherein the thermoplastic formed body and the cured silicone composition are connected to each other releasably.

7. Process according to one or more of the previous claims, wherein the thermoplastic formed body is only produced in the mold.

8. Process according to one or more of the previous claims, wherein the thermoplastic formed body is submitted into the mold when already formed.

9. Process according to one or more of the previous claims, which is conducted discontinuously.

10. Process according to one or more of the previous claims, wherein the molded body has such dimensions that are appropriate to incorporate at least one sphere with a diameter of at least 3 mm.

11. Process according to one or more of the previous claims, wherein the cured silicone portion has such dimensions that are appropriate to incorporate at least one sphere with a diameter of at least 3 mm.

12. Process according to one or more of the previous claims, **characterised in that** the light-curable silicone composition is irradiated through the thermoplastic formed body.

## Revendications

1. Procédé servant à fabriquer des corps moulés composites en plastique, qui comprend les étapes :
a) de fourniture d'une pièce moulée composée d'une résine thermoplastique dans un moule,
b) d'introduction d'une composition de silicone durcissant sous l'effet de la lumière dans ledit moule, qui contient ladite pièce moulée,
c) d'exposition de la composition de silicone durcissant sous l'effet de la lumière à la lumière d'une longueur d'onde adaptée pour le durcissement de la composition de silicone en formant un corps moulé composite à partir de ladite pièce moulée et de la composition de silicone durcie,
dans lequel la pièce moulée utilisée lors de l'étape a) est composée de polypropylène et présente une telle géométrie qui produit une liaison solide avec la composition de silicone durcie de sorte que la pièce moulée thermoplastique et la composition de silicone durcie soient reliées mécaniquement.

2. Procédé selon l'une quelconque ou plusieurs des revendications précédentes, dans lequel le polypropylène présente une température de résistance au thermomoulage (HDT) selon la norme DIN EN ISO 75-1,-2 inférieure à 160 °C.

3. Procédé selon l'une quelconque ou plusieurs des revendications précédentes, dans lequel la composition de silicone durcissant sous l'effet de la lumière est choisie parmi le groupe des compositions de silicone durcissant sous l'effet d'une hydrosilylation.

4. Procédé selon l'une quelconque ou plusieurs des revendications précédentes, dans lequel la composition de silicone durcissant sous l'effet de la lumière est choisie parmi le groupe des compositions de silicone durcissant sous l'effet d'une hydrosilylation, qui est constitué :
a) d'au moins un polyorganosiloxane avec au moins deux groupes organiques insaturés au milieu par molécule,
b) d'au moins un polyhydrogéno-organosiloxane avec au moins deux groupes SiH au milieu par molécule,
c) éventuellement d'une ou de plusieurs charges,
d) d'au moins un catalyseur photoactivable, contenant un métal choisi parmi le groupe qui est constitué de Pt, Ru, Rh, Pd, Ir ou Ni ou un composé dudit métal, ainsi
e) qu'éventuellement d'un ou de plusieurs adjuvants.

5. Procédé selon l'une quelconque ou plusieurs des revendications précédentes, dans lequel le corps moulé composite est choisi parmi le groupe, qui est constitué de pièces moulées dures-souples pour des joints d'étanchéité dans l'ingénierie mécanique, des applications automobiles, des appareils électriques tels que des isolants, des claviers, des conditionnements de produits alimentaires, tels que par exemple des fermetures de bouteille, des capsules de café, des bouchons ou vannes de fermeture et de dosage, des contenants de produits alimentaires, des ustensiles de cuisine, tels que des spatules, des assiettes, des bols, des masques de plongée, des masques de visage, des anneaux de dentition, des tétines, des vibromasseurs, des godemichets, des plugs anaux, des anneaux péniens, des meubles, des dessertes, des objets design configurés haptiquement avec des élastomères de silicone, des applications pour des textiles ou des chaussures, des emblèmes de marque, des articles de sport et de loisirs, tels que des bracelets de montre, des outils, des poignées d'outil, des pistons de seringue, des vannes intraveineuses, des racleurs ou des spatules, des implants, des tuyaux flexibles ou des vannes éventuellement avec des pièces de bride intégrées, des tuyaux flexibles avec des coudes intégrés.

6. Procédé selon l'une quelconque ou plusieurs des revendications précédentes, dans lequel la pièce formée thermoplastique et la composition de silicone durcie sont reliées l'une à l'autre de manière amovible.

7. Procédé selon l'une quelconque ou plusieurs des revendications précédentes, dans lequel la pièce moulée thermoplastique est d'abord produite dans le moule.

8. Procédé selon l'une quelconque ou plusieurs des revendications précédentes, dans lequel la pièce moulée thermoplastique est placée dans le moule une fois déjà moulée.

9. Procédé selon l'une quelconque ou plusieurs des revendications précédentes, qui est mis en oeuvre de manière discontinue.

10. Procédé selon l'une quelconque ou plusieurs des revendications précédentes, dans lequel le corps moulé présente de telles dimensions qui sont adaptées pour recevoir au moins une bille avec un diamètre d'au moins 3 mm.

11. Procédé selon l'une quelconque ou plusieurs des revendications précédentes, dans lequel la pièce en silicone durcie présente de telles dimensions qui sont adaptées pour recevoir au moins une bille avec un diamètre d'au moins 3 mm.

12. Procédé selon l'une quelconque ou plusieurs des revendications précédentes, **caractérisé en ce que** la composition de silicone durcissant sous l'effet de la lumière est exposée à un rayonnement à travers la pièce moulée thermoplastique.
